**Europäisches Patentamt**

(19) **European Patent Office**

**Office européen des brevets**

(11) Veröffentlichungsnummer: **0 054 126**

**A1**

(12) # EUROPÄISCHE PATENTANMELDUNG

(21) Anmeldenummer: **81108467.2**

(22) Anmeldetag: **17.10.81**

(51) Int. Cl.³: **F 24 D 3/00**
**F 24 D 19/02, E 01 C 11/26**

(30) Priorität: **13.12.80 DE 3047034**

(43) Veröffentlichungstag der Anmeldung:
**23.06.82 Patentblatt 82/25**

(84) Benannte Vertragsstaaten:
**AT BE CH FR GB IT LI LU NL SE**

(71) Anmelder: **Hewing, Bernd**
**Gronauerstrasse 14**
**D-4434 Ochtrup(DE)**

(71) Anmelder: **Hagemann, Franz-Josef**
**Eichendorffweg 8**
**D-4434 Ochtrup(DE)**

(72) Erfinder: **Hewing, Bernd**
**Gronauerstrasse 14**
**D-4434 Ochtrup(DE)**

(72) Erfinder: **Hagemann, Franz-Josef**
**Eichendorffweg 8**
**D-4434 Ochtrup(DE)**

(74) Vertreter: **Schulze Horn, Stefan, Dipl.-Ing. et al,**
**Patentanwälte Dipl.-Ing. S. Schulze Horn M.SC. Dr. H.**
**Hoffmeister Goldstrasse 36**
**D-4400 Münster(DE)**

(54) **Flexible Folienbahn mit eingeformten Kanälen für Rohre oder Kabel.**

(57) Flexible Folienbahn mit eingeformten, mäanderförmig verlaufenden, durchgehenden Kanälen (2), deren Schleifen (3) innerhalb entsprechender Bogenabschnitte kongruent sind und in die biegsame Rohre (4) oder Kabel klemmend einsetzbar sind. Im Bereiche der Krümmungsbögen (8') der Kanäle (2) sind Zweigkanäle (10, 11) der Schleifen (3) bis an die Kante (14) der Folienbahn (1) herausgeführt. Die Länge der Zweigkanäle (10, 11) von der Abzweigstelle (13) bis zur Kante (14) der Folienbahn (1, 1') ist gleich der Bogenlänge vom Abzweigpunkt (13) bis zum Krümmungsscheitel (9), gegebenenfalls unter Berücksichtigung einer beabsichtigten Überlappung. Im Bereiche jedes Krümmungsbogens sind je zwei sich spiegelbildlich gegenüberliegende Zweigkanäle (10, 11; 10', 11') vorgesehen, wobei die Spiegelgerade (12) quer zur Bahnrichtung durch den Krümmungsscheitel (9) verläuft.

./...

Croydon Printing Company Ltd.

EP 0 054 126 A1

Fig. 1

Flexible Folienbahn mit eingeformten Kanälen
für Rohre oder Kabel

Die Erfindung bezieht sich auf eine flexible Folienbahn mit eingeformten, mäanderförmig verlaufenden, durchgehenden Kanälen, deren Schleifen innerhalb entsprechender Bogenabschnitte (Schleifen) kongruent sind und in die biegsame Rohre oder Kabel klemmend einsetzbar sind.

Aus der DE-OS 29 15 975 ist ein vorgefertigtes Einbauelement für Flüssigkeits-Flächenheizungen bekannt, das aus einer Basisplatte besteht, mit der Heizrohre zu verbinden sind. Die Basisplatte ist aus einem flexiblen Material hergestellt, wobei die Heizrohre in tiefgezogenen Nuten bzw. Kanälen der Basisplatte liegen. Die Basisplatte kann aus Kunststoff- oder Metallfolie hergestellt sein. Vorteil der bekannten tiefgezogenen Folienbahn ist, daß sie in ihrer Gesamtheit, d.h. mit Rohren oder ohne Rohre, aufgerollt und leicht transportiert werden kann. An Ort und Stelle wird die Folienbahn ausgerollt, so daß beispielsweise eine Anordnung mit Rohren oder Kabeln hergestellt werden kann, die für eine Fußbodenheizung dient, wobei ein durchgehender Rohrstrang hergestellt ist, der entsprechend an Vorlauf und Rücklauf des Heizungssystems angeschlossen wird. In der praktischen Anwendung derartiger flexibler Folien zeigen sich folgende Nachteile:
a) Üblicherweise sind Räume nicht so schmal, daß eine

2

einzige ausgelegte Bahn für eine ausreichende Heizung sorgt. Es ist erforderlich, mehrere Bahnen nebeneinander anzuordnen, wobei Vorlauf und Rücklauf in diesen getrennten Bahnen erfolgen müssen. Es ist dabei relativ umständlich, die Rohre von der einen Bahn in die andere zu überführen; üblicherweise sind daher Rohrverbindungen anzubringen.

b) Bei der Auslegung müssen die Bahnen an ihren Enden sehr genau geschnitten werden, um eine klemmungsfreie und einfache Rückführung nebeneinanderliegender Rohrstränge zu ermöglichen.

Es stellt sich demnach die Aufgabe, eine Bahn aus flexibler Folie anzugeben, bei der die in den Kanälen verlaufenden Rohre oder Kabel möglichst ohne sie zu durchschneiden verlegt werden können, auch wenn mehrere derartiger Bahnen zur Flächenabdeckung nebeneinander verlegt werden müssen. Dabei soll die Folie so beschaffen sein, daß auch Bahnen verlegt werden können, bei denen die Folien bereits mit eingelegten Rohren oder Kabeln angeliefert werden.

Um diese Aufgabe zu erfüllen, werden gemäß Erfindung bei der Folienbahn im Bereich der Krümmungsbögen der Mäanderschleifen wenigstens bei einem Teil dieser Schleifen Zweigkanäle bis an die Kante der Folienbahn herausgeführt, wobei die Länge der Zweigkanäle von der Abzweigstelle bis zur Kante der Folienbahn gleich der Bogenlänge vom Abzweigpunkt bis zum Krümmungsscheitel ist, gegebenenfalls unter Berücksichtigung einer beabsichtigten Überlappung.

Durch diese Zweigkanäle, die ähnlich wie bei einer Schienenweiche eine Auswahl des Rohrweges erlauben, kann am Ende einer abgeschnittenen Folienbahn der Rohrstrang herausgeführt und zu einem benachbart verlegten Bahnabschnitt geführt werden, ohne daß das Rohr geschnitten werden muß. Der benachbart verlegte Folienbahnabschnitt beginnt dabei mit der Schnittkante, die sich beim Durchschneiden der Bahn ergibt.

Die Länge der Zweigkanäle vom Abzweigpunkt bis zur Kante der Folienbahn ist gleich der Bogenlänge vom Abzweigpunkt bis zum Krümmungsscheitel; gegebenenfalls muß eine gewünschte Überlappung berücksichtigt werden. Damit kann die flexible Folienbahn beispielsweise im Bereiche der Zimmerwand abgeschnitten werden, und zwar quer zur Bahnlaufrichtung in Höhe der Bogenscheitel. Vor dem Trennschnitt werden die Rohre im Bereich des Schnittes aus den Kanälen herausgezogen. Das an den Schnitt folgende Stück der Folienbahn wird einfach über Kopf parallel zur verlegten Bahn ausgerollt. Das im Bereich der Schnittkante herausgezogene Rohrstück wird dann in den Zweigkanal gedrückt, an den sich ein entsprechender Zweigkanal der benachbarten Folienbahn anschließt, so daß eine Rückführung möglich ist. Auf diese Weise können zwei, drei oder mehr nebeneinanderliegende Bahnen verlegt werden, ohne daß das Rohr an den Umkehrstellen zerschnitten werden muß. Die Fixierung der nebeneinander überlappend verlegten Folienbahnen erfolgt dabei durch aufeinandergestülpte Klemmsockel.

Diese Art der Verlegung bringt große Vorteile. Nicht nur, daß keine Rohre zerschnitten und wieder zusammengefügt werden müssen; auch die Sicherheit der Verlegung ist wesentlich erhöht, da erfahrungsgemäß an den Verbindungsstellen der Rohre im Laufe der Zeit am ehesten Wasseraustritte erfolgen können.

Die beschriebene Anordnung und Verlegetechnik ist in erster Linie für Warmwasserrohre bei Fußbodenheizungen konzipiert worden. Sie läßt sich aber ohne weiteres auch ausdehnen auf zu verlegende Heizkabel, Kühl-

4

schlangen oder ähnliche Konfigurationen, bei denen Rohrschlangen, Kabel oder dergleichen flächendeckend verlegt werden sollen.

Im Zusammenhang mit der mäanderförmigen Verlegung von Heizleitungen ist aus der DE-OS 2 823 080 eine Grundplatte bekannt, bei der an den Scheitelpunkten der Kanalumlenkbögen Kanäle vorgesehen sind, die die gebogenen Kanäle mit den Randstreifen der anschließenden Wand verbinden. Diese Verbindungskanäle dienen aber nicht zum Einlegen von Kabeln oder Rohren, sondern zum Entfeuchten der eigentlichen Wärmedämmschicht.

Weiterhin offenbart die DE-OS 2 346 155 ein plattenförmiges Raumheizelement mit Nuten, in denen Rohrleitungen verlegt sind. Die Rohre werden bei nebeneinanderliegenden Elementen über Kupplungen verbunden, wobei entsprechende Kanäle aus der Fläche der Grundplatte herausgeführt sind. Diese Konfiguration löst nicht das Problem, Rohre ohne sie zu zerschneiden verlegen zu können.

Schließlich ist der DE-OS 2 146 546 eine Anordnung von mäanderförmigen Schleifen zu entnehmen, bei denen die aufeinander folgenden Mäanderstrecken nicht parallel zueinanderliegen, sondern einen spitzen Winkel bilden. Am Rande der Mäanderstrecken sind jeweils Bogenstücke vorhanden, die die Strecken miteinander verbinden.

Die Erfindung wird in der nachfolgenden Beschreibung anhand von Ausführungsbeispielen und der Zeichnung näher erläutert. Es zeigt:
Figur 1 eine Bahn, die aus flexibler Folie mit mäanderförmig angeordneten Vertiefungen besteht,
Figur 2 vergrößert einen Schnitt durch eine solche Bahn mit einem Rohr, und
Figur 3 die am Rand angeordneten Klemmsockel.

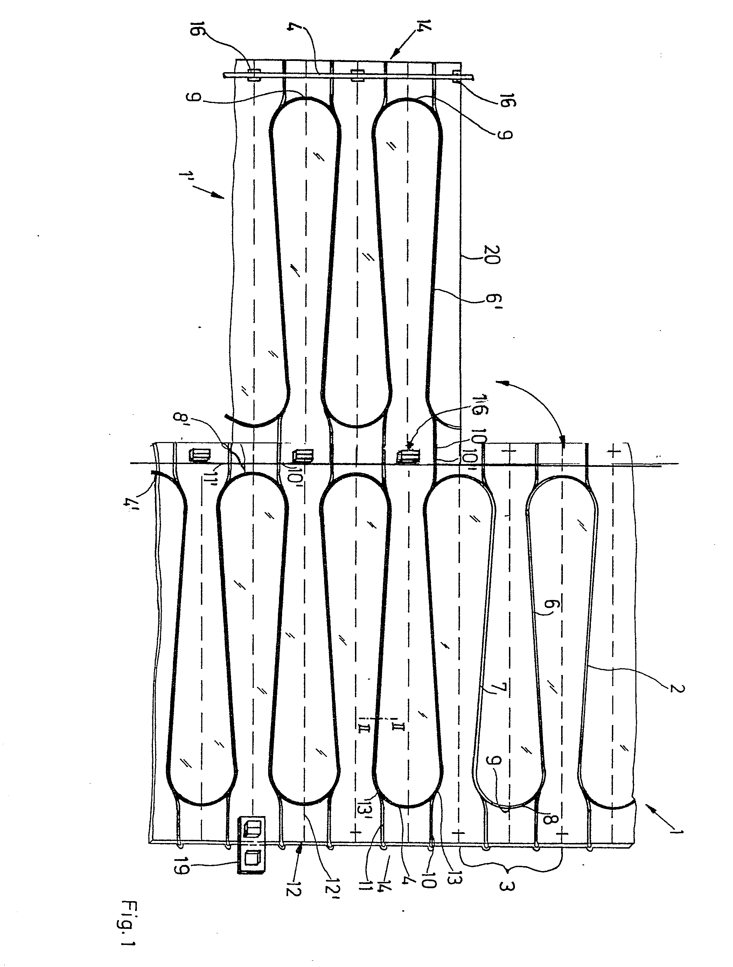

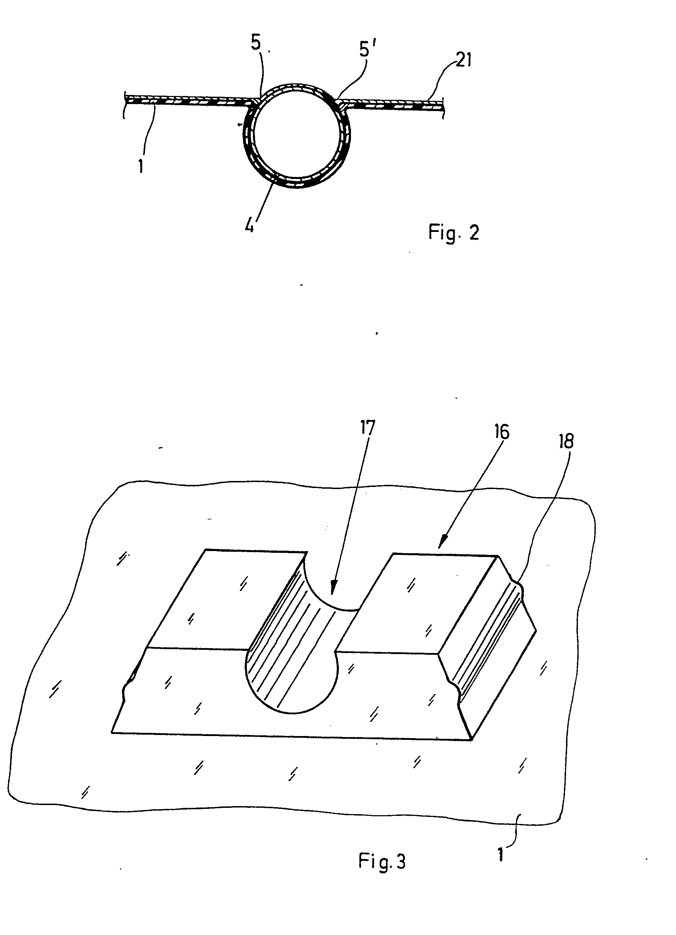

Die in der Figur 1 dargestellte Folienbahn 1 besteht aus einer flexiblen, im Tiefziehverfahren geprägten oder geformten Folie aus thermoplastischem Kunststoff, z.B. aus schlagfestem Polystyrol oder schlagzähem PVC, Aluminium- oder kaschierter Kunststoffolie oder dergleichen, wobei nicht so sehr die Wärmeleitfähigkeit im Vordergrund steht, sondern die leichte Verarbeitbarkeit und hohe Flexibilität, und auch die Preiswürdigkeit. Die Bahn 1 hat beispielsweise eine Breite von 1000 mm, wobei Abschnitte in der Länge von 30 m oder mehr zu einem Ballen gewickelt werden können. Die Bahn hat eingeformte mäanderförmig verlaufende durchgehende Kanäle 2, deren Lage und Gestalt innerhalb entsprechender Bogenabschnitte (Schleifen 3) kongruent ist und in die biegsame Rohre klemmend einsetzbar sind. Die Kanäle 2 sind im Tiefziehverfahren in die Folie eingeprägt, wobei die Ränder 5, 5' etwas über den größten Querschnitt des Rohres hochragen (Figur 2).

Nach Figur 1 liegen die beiden aufeinanderfolgenden Mäanderstrecken 6, 7, die zu einer Schleife 3 gehören, nicht genau parallel zueinander. Sie bilden vielmehr einen sehr spitzen Winkel $\alpha$ , für den gilt:

$$0° < \alpha \leq 30°.$$

Die Mäanderstrecken 6, 7 sind durch einen Krümmungsbogen 8' miteinander verbunden, dessen äußerst rechts oder links liegender Teil den Scheitel 9 bildet. Der Krümmungsbogen 8' beschreibt nicht genau einen Halbkreis, obwohl er vorzugsweise kreisförmig gebogen ist. Sein Bogenwinkel $\omega$ beträgt vielmehr

$$2\pi < \omega \leq 7,0,$$

wobei die genannten Grad- und Bogenwinkelmaße in Abhängigkeit zueinander stehen und auch über die genannten Obergrenzen der Bereiche hinausgehen. Abweichend von der Kreisform kann die Mäanderform auch anders gewählt werden, beispielsweise kann sie zur Erniedrigung des Strömungswiderstandes auch aus Klotoiden-Bögen zusammengesetzt sein.

Nach Figur 1 sind im Bereich der Krümmungsbögen 8' jeweils zwei Zweigkanäle 10, 11 vorgesehen, die nach Art einer Schienenweiche aus den Bögen abzweigen und bis an die Kante 14 der Folienbahn 1 herausgeführt sind. Die Zweigkanäle 10, 11 enden im Bereich der Kante 14 völlig offen. Bei den gegenüberliegenden Krümmungsbögen 8' sind ähnliche Zweigkanäle 10, 11 herausgeführt. Im Bereiche jedes Krümmungsbogens 8' sind vorzugsweise je zwei sich spiegelbildlich gegenüberliegende Zweigkanäle 10 und 11 vorgesehen, wobei die Spiegelgerade 12 quer zur Bahnrichtung durch den Krümmungsscheitel 9 verläuft. Entlang der Spiegelgeraden 12 sind senkrecht zur Bahnlaufrichtung Einprägungen 12' in das Folienmaterial eingebracht. Aufgrund der besonderen Geometrie der vorliegenden Anordnung haben diese Einprägungen den Vorteil, daß sie das Wickeln der Folienbahn erleichtern und beim Schneiden zum Umlegen der Folienbahn als Schnittlinie dienen. Wesentlich ist weiterhin, daß die Länge der Zweigkanäle 10 bzw. 11 von der Abzweigstelle 13 bis zur Kante 14 der Bahn gleich der Bogenlänge zwischen zwei benachbarten Abzweigstellen 13, 13' im Krümmungsbereich ist.

Für den Fall, daß die Bahnen nicht in einer paarigen Anzahl verlegt werden können, ist es erforderlich, am Rande einer Bahn die Rohre zurückzuführen. Dies geschieht dadurch, daß zwischen Kante 14 und Scheiteln 9 eine Reihe von Klemmsockeln 16 vorgesehen wird, die mit Klemmkanälen versehen sind, in denen Rohre 4 (oder Kabel) in Laufrichtung der Bahn verlaufend festlegbar sind.

Diese Ausführungsmöglichkeit ist auf der linken Seite der Figur 1 bei der Folienbahn 1' dargestellt. Figur 3 zeigt in vergrößerter Darstellung einen derartigen Klemmsockel 16. Im vorliegenden Falle ist er aus dem Folienmaterial im Tiefziehverfahren herausgearbeitet. Es ist jedoch auch möglich, einen derartigen Klemmsockel als gesonderten Teil herzustellen und ihn auf die Oberseite der Folie zu kleben. Der Sockel ist als abgeschnittene Pyramide gestaltet, wobei eine Vertiefung 17 fast bis zum Grund der Folie eingearbeitet ist. An seinen Seiten trägt der Klemmsockel 16 schmale Klemmrasten 18, die zwei Funktionen erfüllen: Einmal können fertig zugeschnittene Bahnstücke flach übereinanderliegend, beispielsweise seitlich überlappend, im Bereich der Klemmsockel aufeinandergedrückt werden, wobei die Klemmrasten 18 ineinandergreifen und ein unbeabsichtigtes Abheben, beispielsweise durch Windeinfluß auf der Baustelle, verhindern. Weiterhin ist möglich, falls auf die Überlappung verzichtet wird, über die nebeneinanderliegenden Bahnen einen verbindenden Klemmrahmen 19 aufzudrücken, dessen Seitenkanten ebenfalls an den Klemmrasten 18 gehalten werden.

Die Verlegung und Verwendung der Folienbahn geschieht vorteilhafterweise wie folgt:

Eine Folienbahn 1, beispielsweise in einer Länge von 30 m, wird bereits mit eingelegten Rohren 4 angeliefert. Zu Beginn der Folienbahn ragt ein kurzes Rohrstück 4' heraus, das zum Anschluß des Vorlaufstutzens dient. Die Folienbahn wird über die Zimmerbreite ausgelegt und am Ende genau im Verlaufe der Einprägungen 12' durchgeschnitten. Das in der Bahn verlaufende Rohr wird jedoch nicht mit durchgeschnitten, sondern ein Stück im Scheitel 9 vorher herausgezogen, so daß der Schnitt ohne Verletzung möglich ist. Man erhält damit eine Schnittkante 20. Anschließend wird die Bahn um 180° in

Gegenlaufrichtung gedreht (angedeutet durch Doppelpfeil in Figur 1) und gelangt in die Position der Bahn 1', wobei die Bahn die nebenliegende so überlappt, daß die Klemmsockel 16 aufeinandergedrückt werden können und sich über die Klemmrasten 18 verbinden.

Über die in Flucht liegenden Zweigkanäle 10, 10'' kann nun das aus dem Bogenbereich entnommene Rohr in die gegenüberliegende Bahn überführt werden. In der Mäanderstrecke 6' liegt das Rohr bereits ein. Durch Auslegen der Bahn in Gegenrichtung wird damit ein Rohrstrang gebildet. Wieder in Höhe des Beginns beim Rohrstück 4' angekommen, wird erneut durchschnitten und eine Bahn in Gegenrichtung verlegt. Angenommen, daß nach Verlegung von drei Bahnen das Zimmer ausgelegt ist, ist es nun erforderlich, eine Rückführung durchzuführen. Dazu wird aus dem folgenden Stück der Bahn genügend Rohr aus den Kanälen herausgezogen und so rückgeführt, wie dies aus dem linken Teil der Figur 1 ersichtlich ist. Das überflüssige Stück Folie wird nicht mehr benötigt.

Nach diesen Vorgängen ist der Rohrverlauf festgelegt, wobei innerhalb des gesamten Rohrstranges keine Schnitte vorhanden sind. Auch ist möglich, die Folie am Untergrund noch ausreichend zu befestigen, beispielsweise zu verkleben oder festzunageln. Üblicherweise wird jetzt beim sogenannten Naßverfahren die Folie mit Estrich übergossen. Nach Aushärten ist der Boden mit Fußbodenheizung versehen und begehbar.

Bei der sogenannten Trockenverlegung, die insbesondere im Fertighausbau verwendet wird, können die verlegten Bahnen 1, 1' noch mit einer etwa 0,1 mm dicken Aluminiumfolie 21 überdeckt werden. Darüber liegt der entsprechende Aufbau mit Spanplatten.

Weitere Anwendungsbeispiele mit analoger Gestaltung sind:

- für Wandheizungen; hierbei kann die Folie mit Stanzlöchern zum Halt des Putzes versehen sein;

- die Folie kann mit den Rohren auch in Deckenelemente, Betonfertigteile und Gipskartonelemente eingearbeitet (eingegossen) sein;

- entsprechend ausgelegte Elemente können auch zum Beheizen von Freiflächen, Brücken, Bauten, Fahrbahnen und dergleichen dienen.

N e u e   P a t e n t a n s p r ü c h e

1. Flexible Folienbahn mit eingeformten, mäanderförmig verlaufenden, durchgehenden Kanälen, deren Schleifen innerhalb entsprechender Bogenabschnitte (Schleifen) kongruent
sind und in die biegsame Rohre oder Kabel klemmend einsetzbar sind,
dadurch gekennzeichnet, daß im Bereiche der Krümmungsbögen (8, 8') der Kanäle (2) wenigstens eines Teiles der
Schleifen (3) Zweigkanäle (10, 11) bis an die Kante (14)
der Folienbahn (1) herausgeführt sind und daß die Länge
der Zweigkanäle (10, 11) von der Abzweigstelle (13) bis
zur Kante (14) der Folienbahn (1, 1') gleich der Bogenlänge vom Abzweigpunkt (13) bis zum Krümmungsscheitel
(9) ist, gegebenenfalls unter Berücksichtigung einer
beabsichtigten Überlappung.

2. Folienbahn nach Anspruch 1, dadurch gekennzeichnet, daß
im Bereiche jedes Krümmungsbogens (8, 8') je zwei sich
spiegelbildlich gegenüberliegende Zweigkanäle (10, 11;
10', 11') vorgesehen sind, wobei die Spiegelgerade (12)
quer zur Bahnrichtung durch den Krümmungsscheitel (9)
verläuft.

3. Bahn nach Anspruch 2, dadurch gekennzeichnet, daß jeweils zwei aufeinanderfolgende Mäanderstrecken (6, 7),
die zu einem Krümmungsbogen (8) gehören, untereinander
einen Winkel von

$$0° < \alpha \leqq 30°$$

bilden.

4. Folienbahn nach einem der Ansprüche 1 bis 3, dadurch gekennzeichnet, daß senkrecht zur Bahnlaufrichtung in Höhe
der Bogenscheitel Sollbruchstellen bzw. Einprägungen (12')
in das Folienmaterial eingebracht sind.

5. Folienbahn nach einem der Ansprüche 1 bis 4, dadurch
gekennzeichnet, daß sie als vorgefertigtes Einbauelement bereits mit eingelegten Rohren (4) oder Kabeln
versehen ist.

6. Bahn nach Anspruch 1, dadurch gekennzeichnet, daß im
Randbereich der Folienbahn (1) Haltevorrichtungen
(Klemmsockel 16) mit Vertiefungen (17) angebracht,
vorzugsweise ausgeprägt sind, in denen die Rohre (4)
oder Kabel in Laufrichtung der Bahn (1) verlaufend
festlegbar sind.

7. Folienbahn nach Anspruch 6, dadurch gekennzeichnet,
daß die Haltevorrichtungen als Klemmsockel (16) gestaltet sind.

Fig. 1

Fig. 2

Fig. 3

Europäisches
Patentamt

**EUROPÄISCHER RECHERCHENBERICHT**

| EINSCHLÄGIGE DOKUMENTE | | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | . |
| A | DE - A1 - 2 840 148 (H.-D. SIEGMUND) <br> * Seite 4, letzter Absatz; Fig. 1 * <br> -- | 1,6,7 | F 24 D 3/00 <br> F 24 D 19/02 |
| A,D | DE - A1 - 2 915 975 (B. HEWING et al.) <br> * Anspruch 1 * <br> -- | 5 | E 01 C 11/26 |
| A | DE - A1 - 2 815 416 (E. FRIEDL) <br> * Fig. 3 * <br> -- | 5 | |
| A | DE - A1 - 2 456 836 (F.-J. HAGEMANN) <br> * Ansprüche 8, 13; Seite 7, Absatz 4; <br> Fig. 2 * <br> -- | 4 | RECHERCHIERTE SACHGEBIETE (Int. Cl.³) |
| A,D | DE - A - 2 146 546 (MULTICHEMIE) <br> * Fig. 2, 3 * <br> -- | 3 | E 01 C 11/00 <br> F 24 D 3/00 <br> F 24 D 19/00 |
| A | DE - A1 - 2 823 080 (I. DIER) <br> * Seite 5 * <br> ---- | | |

KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 26-02-1982 | KRABEL |

EPA form 1503.1  06.78